# FASCICULE DE BREVET EUROPEEN

(11) **EP 0 360 631 B1**
(45) Date de publication et mention de la délivrance du brevet: **03.02.1993**
(21) Numéro de dépôt: 89402069.2
(22) Date de dépôt: 21.07.1989
(51) Int. Cl.: F16F 9/49

(54) **Vérin de suspension hydropneumatique de véhicule**
Hydropneumatische Radaufhängung für ein Kraftfahrzeug
Hydropneumatic suspension strut for a vehicle

(30) Priorité: 14.09.1988 FR 8811954
(43) Date de publication de la demande: 28.03.1990
(73) Titulaire: AUTOMOBILES PEUGEOT, 75116 Paris (FR); AUTOMOBILES CITROEN, 92200 Neuilly-sur-Seine (FR)
(72) Inventeur: Le Gourvellec, François, F-78120 Rambouillet (FR)
(74) Mandataire: Fabien, Henri

(56) Documents cités:
- EP-A- 321 324
- EP-A- 0 118 335
- FR-A- 2 079 874
- FR-A- 2 624 447
- GB-A- 398 350
- GB-A- 2 027 160
- US-A- 4 050 684
- PATENT ABSTRACTS OF JAPAN, vol. 7, no. 81 (M-205)[1226], 5 avril 1983, page 132 M 205; & JP-A-58 8840 (YAMAHA HATSUDOKI K.K.) 19-01-1983

## Description

L'invention concerne un vérin porteur pour suspension hydropneumatique de véhicule automobile, du genre de ceux qui comportent, articulé à un bras support de roue. un cylindre sur lequel coulisse, articulé à la structure du véhicule. un piston dont la tige est munie d'un alésage axial relié hydrauliquement à un accumulateur hydropneumatique, de préférence à membrane.

Les vérins porteurs, du type défini ci-dessus sont généralement équipés de butée d'attaque et de détente, en élastomère ou hydraulique, destinées à limiter dans un sens comme dans l'autre le débattement du piston et à amortir ce débattement en fin de course.

Le document EP-A-118335 décrit un vérin de suspension hydropneumatique de véhicule automobile, comprenant articulé à un bras support de roue, un cylindre 15 dans lequel coulisse, articulé à la structure du véhicule, un piston 10 dont la tige 5 traversant le cylindre de façon étanche est munie d'un alésage 7 axial relié à un accumulateur hydropneumatique 8, le vérin comportant, incorporé au cylindre des moyens de butée d'attaque 16. Il a été également proposé dans le brevet GB-A-398350 un absorbeur de chocs hydropneumatique comportant un clappet flottant propre à étrangler l'écoulement du liquide entre le clapet et une perche fixée dans le fond du cylindre, le long de rainures de différentes longueurs. Ce système ne permet pas d'obtenir une progression continue de l'amortissement selon une loi souhaitée.

L'invention a pour objet, un vérin de suspension hydropneumatique comportant une butée d'attaque hydraulique particulièrement simplifiée, propre à amortir progressivement la course du piston en fin d'attaque et n'exerçant aucun effort antagoniste pendant le retour du piston en position moyenne.

Le vérin qui fait l'objet de l'invention se caractérisé par le fait que sa butée d'attaque hydraulique comprend, solidaire du fond du cylindre un pointeau sur lequel peut s'engager, de manière à étrangler progressivement l'écoulement du liquide vers l'accumulateur, un clapet flottant emprisonné dans un chambrage intérieur au piston.

Selon une autre caractéristique, le clapet flottant comporte des moyens, en se déplaçant dans son chambrage, pour n'opposer à la remontée du piston, aucun effort antagoniste.

Selon encore une autre caractéristique, le piston comporte, communiquant par un perçage axial avec l'alésage de la tige, un alésage axial inférieur limité supérieurement par un épaulement et contenant le clapet flottant qui peut ainsi débattre entre l'épaulement du piston et un anneau d'arrêt engagé sur la paroi latérale de l'alésage.

Avantageusement, le clapet flottant se compose d'une rondelle munie d'une pluralité d'encoches périphériques et d'un trou axial et son diamètre extérieur est voisin de l'alésage du piston de manière à être centré par la paroi latérale. Il comporte sur sa face supérieure, comprise entre son trou axial et ses encoches périphériques, une portée circulaire propre à s'appliquer de manière étanche sur l'épaulement du piston.

D'autres caractéristiques et avantages de l'invention apparaîtront mieux dans la description détaillée qui suit et se réfère aux dessins annexés donnés uniquement à titre d'exemple, et dans lesquels:
- La Figure 1 représente un vérin de suspension selon l'invention.
- La Figure 2 représente partiellement le vérin en fin de course d'attaque.
- La Figure 3 représente partiellement le vérin pendant la remontée du piston.

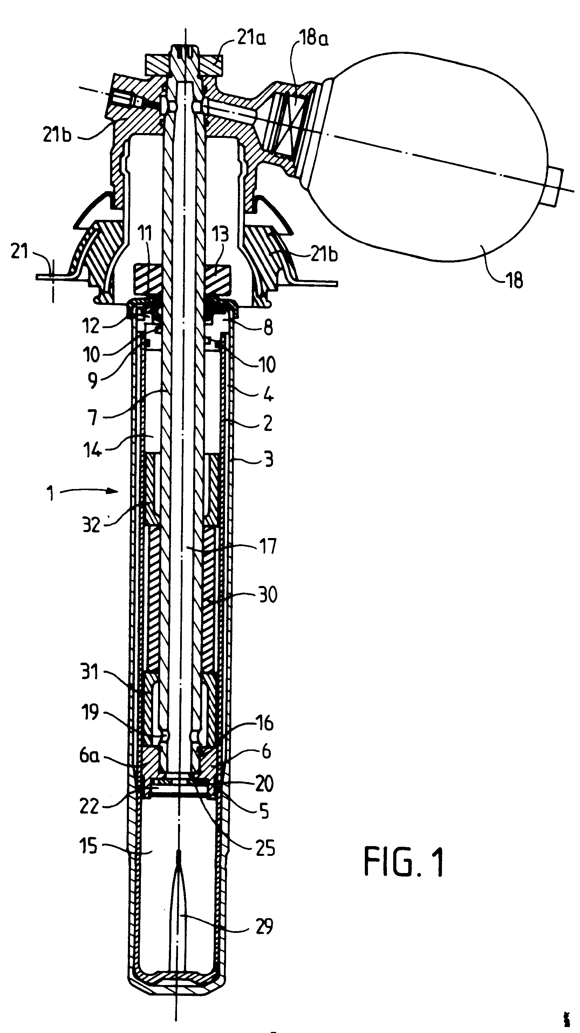

En se reportant aux figures, notamment à la Figure 1, on peut voir un vérin de suspension 1 comprenant un cylindre 2 enveloppé d'une paroi protectrice 3 qui définit avec le cylindre 2 une chambre annulaire 4.

Sur le cylindre 2 coulisse de manière étanche, à l'aide d'un segment 5, un piston 6 composé d'un palier inférieur 6a et d'une tige 7 coulissant sur un palier supérieure 8 solidaire du cylindre.

Le palier supérieur 8 est monté étanche sur le cylindre 2 à l'aide d'un joint torique 9, alors que l'étanchéité entre la tige 7 du piston 6 et le palier supérieur 8 est assurée par un joint incliné 10 et un joint lécheur 11. Les fuites de liquide à travers le palier supérieur 8 sont acheminées par un évidement 12 du palier 8 vers la chambre annulaire 4 et retournent au réservoir par un raccord non représenté. Une butée élastique 13 recouvre l'enveloppe 3 du cylindre 2.

Le piston 6 sépare dans le cylindre 2 un compartiment 14 contenant la tige 7 du piston et un deuxième compartiment 15 du côté opposé.

Le palier 6a du piston 6 est vissé en 16 à la tige 7 qui comporte un alésage axial 17 relié hydrauliquement à un accumulateur hydropneumatique 18 par l'intermédiaire d'un amortisseur hydraulique 18a. L'alésage 17 communique par un perçage latéral 19 avec le compartiment 14 et par l'intermédiaire d'un perçage axial 20 du palier 6a du piston 6, avec le compartiment 15.

La tige 7 du piston 6 est solidement fixée, à l'aide d'un écrou 21a, sur un appui élastique 21b, qui est lui-même solidaire de l'accumulateur hydropneumatique 18 et de la carrosserie 21 du véhicule. Le cylindre 2 et son enveloppe protectrice 3 sont montés de façon connue et non représentée solidaires du pivot de roue.

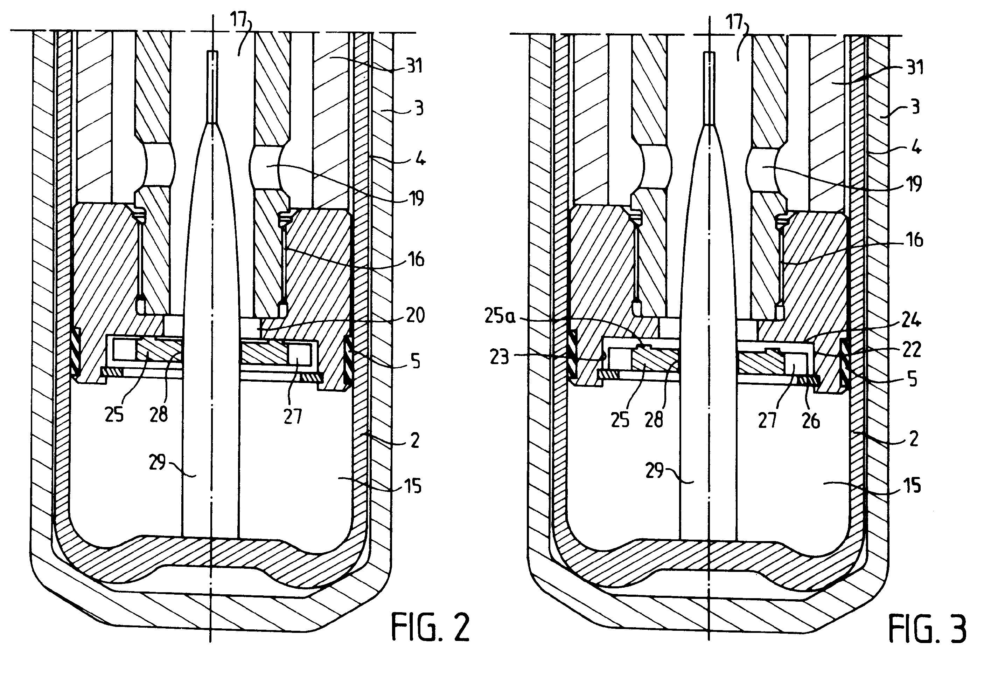

Le piston 6 comporte, du côté opposé à la tige 7 (Voir figures 2 et 3), un chambrage 22 composé d'un alésage cylindrique 23, limité supérieurement par un épaulement 24, ouvert du côté du compartiment 15 et relié hydrauliquement à l'alésage axial 17 de la tige du piston par le perçage 20.

Dans le chambrage 22, peut débattre, un clapet flottant 25, entre l'épaulement 24 et un anneau d'arrêt 26, engagé sur la paroi latérale de l'alésage 23. Le clapet flottant 25 se compose d'une rondelle, centrée par la paroi latérale de l'alésage 23 et munie d'une pluralité d'encoches périphériques 27 et d'un trou axial 28 plus petit que le perçage 20 du piston dont le diamètre est plus petit que le diamètre intérieur des encoches 27.

Le clapet flottant 25 présente sur sa face supérieure, comprise entre le trou axial 28 et les encoches 27, une portée circulaire 25a propre à s'appliquer d'une manière étanche sur l'épaulement 24 du piston.

Ainsi, quand le clapet flottant 25 est en appui sur l'épaulement 24, le liquide ne peut circuler, entre le compartiment 15 et l'alésage 17 que par le trou 28; quand le clapet flottant est en position intermédiaire, ou en appui sur l'anneau d'arrêt 26, le liquide peut circuler par les encoches 27 et par le trou 28.

Dans le fond du cylindre 2, est fixé un pointeau 29 de révolution, ayant un profil approprié à la loi d'amortissement souhaitée en fin de course d'attaque. Le pointeau 29 admet un diamètre maximal, dans sa partie utile, plus petit que le perçage 20 du piston et peut s'engager dans le trou 28 du clapet flottant pour étrangler l'écoulement du liquide du compartiment 15 vers l'accumulateur 18. Il constitue ainsi une butée d'attaque.

Quand le piston 6 s'enfonce dans le cylindre 2 pendant une course d'attaque, le clapet flottant 25 vient se placer en appui sur l'épaulement 24 et le liquide peut circuler, du compartiment 15 vers l'accumulateur en passant par le trou 28. Lorsqu'en fin de course d'attaque le trou 28 s'engage sur le pointeau 29, l'écoulement est étranglée et la course du piston est amortie. La butée élastique 13 achève d'amortir la course d'attaque.

Lorsqu'après une course d'attaque, le piston revient vers la position moyenne, le clapet flottant 25 se détache de l'épaulement 24 et le liquide du compartiment 14 peut s'écouler vers le compartiment 15 en passant par le perçage 17, le perçage 20 et les encoches 27; pendant ce temps, le clapet flottant 25 vient se mettre en appui sur l'anneau d'arrêt 26.

Le vérin 1 comprend, à part sa butée d'attaque hydraulique, une butée 30 de détente en élastomère de type connu, disposée entre deux appuis de butée 31 et 32. Lorsqu'au cours d'un virage le cylindre 2 pivote par rapport au piston 6, la butée de détente 30 étant comprimée, les appuis 31 et 32 glissent sur les paliers 6 et 8 et la butée de détente 30 ne subit aucune torsion.

Le vérin muni de sa butée d'attaque hydraulique, tel qu'il est décrit ci-dessus, comporte une solution très simple pour le retour en position moyennne, après une course d'attaque, sans opposition d'une force hydraulique antagoniste. La configuration simplifiée du pointeau permet d'adapter facilement son profil à la loi d'amortissement appropriée en fin d'attaque.

## Revendications

1. Vérin de suspension hydropneumatique de véhicule automobile, comprenant, articulé à un bras support de roue, un cylindre (2) dans lequel coulisse, articulé à la structure du véhicule (21), un piston (6) dont la tige (7), traversant le cylindre de façon étanche, est munie d'un alésage axial (17) relié à un accumulateur hydropneumatique (18), le vérin comportant, incorporé au cylindre (2) des moyens de butée d'attaque (25, 29), caractérisé en ce que lesdits moyens sont hydrauliques et comprennent, solidaire du fond du cylindre, (2), un pointeau (29) sur lequel peut s'engager un clapet flottant (25) emprisonné dans un chambrage (22) intérieur au piston (6), de manière à étrangler progressivement, selon la loi d'amortissement souhaitée, l'écoulement du liquide vers l'accumulateur (18), entre le pointeau (29) présentant un profil de révolution approprié et un trou axial (28) du clapet (25).

2. Vérin selon la revendication 1, caractérisé en ce que le piston (6) comporte, communiquant par un perçage axial (20) avec l'alésage (17) de la tige (7), un alésage (22) axial inférieur, limité supérieurement par un épaulement (24) et contenant le clapet flottant (25) qui peut ainsi débattre entre l'épaulement (24) du piston (6) et un anneau d'arrêt (26) engagé sur la paroi latérale de l'alésage (22).

3. Vérin selon la revendication 2, caractérisé en ce que le clapet flottant (25) se compose d'une rondelle munie d'une pluralité d'encoches (27) périphériques et d'un trou axial (28); et en ce qu'il est centré par la paroi latérale de l'alésage (22) du piston (6).

4. Vérin selon la revendication 3, caractérisé en ce que le clapet flottant (25) comporte sur sa face supérieure, comprise entre son trou axial (28) et ses encoches (27) périphériques, une portée circulaire (25a) propre à s'appliquer de manière étanche sur l'épaulement (24) du piston (6).

## Patentansprüche

1. Hydropneumatische Radaufhängung für ein Kraftfahrzeug, bestehend aus einem gelenkig an eine Radstrebe angebrachten Zylinder (2), in dem ein gelenkig an die Fahrzeugstruktur angebrachter Kolben (6) gleitet, dessen Kolbenstange (7), die abgedichtet durch den Zylinder führt, mit einer Axialbohrung (17) versehen ist, welche an einen Hydroblasenspeicher (18) angeschlossen ist, wobei der in den Zylinder (2) eingebaute Tragzylinder mit hydraulischen Anschlagvorrichtungen für den Aufwärtshub (25, 29) ausgestattet ist, dadurch gekennzeichnet, daß diese Vorrichtungen eine fest mit dem Zylinder (2) verbundene Nadel (29) enthält, auf die sich eine in eine Innenkammer (22) des Kolbens (6) eingeschlossene Schwimmerklappe legen kann, so daß der Abfluß der Flüssigkeit zum Speicher (18), zwischen der Nadel (29), die ein geeignetes Rotationsprofil aufweist, und einer Axialbohrung (28) der Klappe (25), schrittweise gemäß dem gewünschten Dämpfungsgesetz, gedrosselt werden kann.

2. Zylinder gemäß Anspruch 1, dadurch gekennzeichnet, daß der Kolben (6), dessen Axialbohrung (20) mit der Bohrung (17) der Kolbenstange (7) übereinstimmt, eine untere Axialbohrung (22) aufweist, die oben durch eine Schulter (24) begrenzt ist und die Schwimmerklappe (25) enthält, die sich so zwischen der Schulter (24) des Kolbens (6) und einem Anschlagring (26), der in die Seitenwand der Bohrung (22) eingebunden ist, bewegen kann.

3. Zylinder gemäß Anspruch 2, dadurch gekennzeichnet, daß die Schwimmerklappe (25) aus einer rundherum eingekerbten Dichtung und einer Axialbohrung besteht und durch die Seitenwand der Bohrung (22) des Kolbens (6) zentriert wird.

4. Zylinder gemäß Anspruch 3, dadurch gekennzeichnet, daß die Schwimmerklappe (25) auf ihrer Oberseite, zwischen ihrer Axialbohrung (28) und ihren Kerben (27), eine kreisförmige Leiste (25a) aufweist, die sich dicht auf die Schulter (24) des Kolbens (6) legen kann.

## Claims

1. A hydro-pneumatic suspension jack for a motor vehicle comprising, articulated with a wheel support arm, a cylinder (2) in which, articulated with the vehicle structure (21), there slides a piston (6), the rod (7) of which, passing through the cylinder so as to maintain a seal, is provided with an axial bore (17) connected to a hydro-pneumatic accumulator (18), the jack comprising, incorporated with the cylinder (2), hydraulic drive limit stop means (25, 29), characterised in that said means comprise, integral with the bottom of the cylinder (2), a needle (29) on which may be engaged a floating valve (25) captured within a recess (22) inside the piston (6), so as gradually to throttle down, according to the desired principle of damping, the flow of liquid to the accumulator (18), between the needle (29) which has an appropriate profile of revolution and an axial hole (28) in the valve (25).

2. A jack according to Claim 1, characterised in that, communicating via an axial perforation (20) with the bore (17) of the rod (7), the piston (6) comprises a lower axial bore (22), limited above by a shoulder (24) and containing the floating valve (25) which can thus move between the shoulder (24) of the piston (6) and a stop ring (26) engaged on the side wall of the bore (22).

3. A jack according to Claim 2, characterised in that the floating valve (25) is composed of a washer provided with a plurality of peripheral notches (27) and an axial hole (28); and in that it is centred by the side wall of the bore (22) of the piston (6).

4. A jack according to Claim 3, characterised in that the floating valve (25) has on its upper face, comprised between its axial hole (28) and its peripheral notches (27), a circular bearing surface (25a) suitable for being applied, so as to maintain a seal, to the shoulder (24) of the piston (6).
